# EUROPÄISCHE PATENTSCHRIFT

(11) **EP 3 666 357 B1**
(45) Veröffentlichungstag und Bekanntmachung des Hinweises auf die Patenterteilung: **01.11.2023**
(21) Anmeldenummer: 19215665.1
(22) Anmeldetag: 12.12.2019
(51) Int. Cl.: B01D 29/21, B01D 29/58, B01D 35/153, B01D 35/16

(54) **FILTEREINRICHTUNG, FUNKTIONSTRÄGER UND VERWENDUNG EINES RINGFILTERELEMENTS**
FILTER DEVICE, FUNCTIONAL SUPPORT AND METHOD OF USING AN ANNULAR FILTERING ELEMENT
DISPOSITIF FILTRANT, SUPPORT FONCTIONNEL ET MÉTHODE D'UTILISATION D'UN ÉLÉMENT FILTRANT ANNULAIRE

(30) Priorität: 14.12.2018 DE 102018221768
(43) Veröffentlichungstag der Anmeldung: 17.06.2020
(73) Patentinhaber: Mahle International GmbH, 70376 Stuttgart (DE)
(72) Erfinder: HENSINGER, Heiko, 70599 Stuttgart (DE); LINDENBERG, Matthias, 70372 Stuttgart (DE); HÄUSSERMANN, Uli, 70734 Fellbach (DE)
(74) Vertreter: BRP Renaud & Partner mbB Rechtsanwälte Patentanwälte Steuerberater

(56) Entgegenhaltungen:
- EP-A1- 3 498 359
- DE-A1-102009 049 868
- DE-A1-102015 222 359
- DE-U1-202011 104 691
- US-A1- 2003 000 882
- US-A1- 2009 114 588
- US-B1- 7 531 090

## Beschreibung

Die vorliegende Erfindung betrifft eine Filtereinrichtung, insbesondere einen Öl- oder Kraftstofffilter, mit einem, einen Filtergehäusetopf und einen Filtergehäusedeckel aufweisenden Filtergehäuse gemäß dem Oberbegriff des Anspruchs 1. Die Erfindung betrifft außerdem ein Ringfilterelement und einen Funktionsträger.

Bei gattungsgemäßen Filtereinrichtungen ist zur Sicherstellung der Verwendung eines autorisierten Ringfilterelements an diesem oftmals ein axial von einer unteren Endscheibe abstehender Pin angeordnet, mittels welchem das Ringfilterelement bei montierter Filtereinrichtung in einen filtergehäusetopfseitigen Kanal eingreift und eine Inbetriebnahme der Filtereinrichtung ausschließlich dann möglich ist, sofern das verwendete Ringfilterelement den erforderlichen Pin an der richtigen Stelle aufweist. Hierdurch können insbesondere die Verwendung von nicht autorisierten Ringfilterelementen vermieden und dadurch Schäden an bspw. einem Verbrennungsmotor verhindert werden.

Aus der DE 10 2009 049 868 A1 ist eine gattungsgemäße Filtereinrichtung bekannt.

Aus der DE 20 2011 104 691 U1 und der DE 10 2015 222 359 A1 ist jeweils ein Flüssigkeitsfilter mit einem Filtergehäuse und einem darin eingesetzten Ringfilterelement bekannt.

Die vorliegende Erfindung beschäftigt sich mit dem Problem, für eine Filtereinrichtung der gattungsgemäßen Art, eine verbesserte oder zumindest eine alternative Ausführungsform anzugeben, welche die Verwendung autorisierter Ringfilterelemente begünstigt.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer an sich bekannten Filtereinrichtung ein erstes, durch einen, insbesondere filtergehäusetopfseitigen, Kanal und einen Pin an einem Ringfilterelement gebildetes Schlüssel-Schloss-System durch ein zweites derartiges Schlüssel-Schloss-System zu ergänzen und dadurch die Sicherheit der Verwendung von autorisierten Ringfilterelementen zu steigern und das Risiko von potentiellen Motorschäden deutlich zu reduzieren. Die erfindungsgemäße Filtereinrichtung, welche beispielsweise als Öl- oder Kraftstofffilter ausgebildet sein kann, besitzt ein Filtergehäuse mit einem Filtergehäusetopf und einem damit, insbesondere verschraubbaren, Filtergehäusedeckel. In dem Filtergehäuse ist das zuvor beschriebene Ringfilterelement angeordnet, welches an einer unteren Endscheibe einen exzentrisch angeordneten und axial abstehenden Pin aufweist, mittels welchem es bei montierter Filtereinrichtung in den ersten Kanal eingreift. Zusätzlich ist ein rohrförmiger Dom vorgesehen, der bei montierter Filtereinrichtung in einen Innenraum des Ringfilterelements eingreift. An einem freien Ende dieses rohrförmigen Doms, das heißt an einem oberen Ende, ist eine Führungskontur vorgesehen, die mit einem am Ringfilterelement angeordneten Führungselement zusammenwirkt. Diese domseitige Führungskontur besitzt darüber hinaus eine Axialnut, zu welcher das Führungselement bei der Montage der Filtereinrichtung hinführbar ist und die relativ zum Pin derart angeordnet ist, dass dieser in den ersten Kanal einführbar ist, sofern das Führungselement in die Axialnut eintritt. Dies stellt das erste Schlüssel-Schloss-System dar. Des Weiteren besitzt die Filtereinrichtung einen Reinkanal, über welchen ein mittels der Filtereinrichtung gefiltertes Fluid abführbar ist. Erfindungsgemäß ist nun in diesem Reinkanal ein Ventil mit einem Ventilsitz und einem dagegen in eine Schließstellung federvorgespannten Ventilkörper angeordnet. Das Führungselement des Ringfilterelements wirkt dabei derart mit dem Ventilkörper zusammen, dass das Führungselement bei einem Einschieben in die Axialnut nicht nur den Pin relativ zum ersten Kanal ausrichtet, sondern zugleich auch den Ventilkörper in eine Öffnungsstellung überführt. Das Überführen des Ventilkörpers in eine Öffnungsstellung durch das ringfilterelementseitige Führungselement stellt somit das zweite Schlüssel-Schloss-System dar. Generell sind somit bei der erfindungsgemäßen Filtereinrichtung zwei derartige Schlüssel-Schloss-Systeme vorgesehen, die ausschließlich dann einen funktionsgemäßen Betrieb der Filtereinrichtung bzw. das Starten einer Brennkraftmaschine erlauben, sofern ein autorisiertes Ringfilterelement eingesetzt wird. Durch das Erzwingen derartiger autorisierter Ringfilterelemente können insbesondere Motorschäden, durch beispielsweise minderwertige Filtermaterialien, vermieden werden. Um beide Schlüssel-Schloss-Systeme zu bedienen bzw. zu öffnen muss dabei das ringfilterelementseitige Führungselement eine gewisse Relativposition zum Pin aufweisen und zugleich eine Gestalt, die das Betätigen des Ventilkörpers und damit das Öffnen des Ventils im Reinkanal ermöglicht.

Bei einer vorteilhaften Weiterbildung der erfindungsgemäßen Lösung bildet der Dom zumindest bereichsweise den Reinkanal und durchgreift das Ringfilterelement in seinem Innenraum. Somit kann die Führungskontur oben am Reinkanal bzw. dem Dom angeordnet sein, ebenso wie die Axialnut und das eigentliche Ventil im Reinkanal und damit im Innenraum des Ringfilterelements. Rein theoretisch ist selbstverständlich auch denkbar, dass der Dom bzw. der Reinkanal nur bis zu einer gewissen Höhe im Innenraum des Ringfilterelements reicht, wobei in diesem Fall das Führungselement am Ringfilterelement entsprechend weiter unten angeordnet oder entsprechend weiter nach unten gezogen sein muss.

Bei einer vorteilhaften Weiterbildung der erfindungsgemäßen Lösung weist der Ventilkörper eine Ventilkörperstange auf, an der Führungselemente zum Führen der Ventilkörperstange in dem Reinkanal angeordnet sind. Derartige Führungselemente können beispielsweise in Umfangsrichtung unterbrochene oder durchlöcherte Radialkragen sein, die eine koaxiale Führung der Ventilkörperstange im Reinkanal erzwingen und dadurch eine hohe Funktionssicherheit des Ventils bieten.

Zweckmäßig verläuft der Reinkanal zumindest teilweise in einem in das Filtergehäuse einsetzbaren Funktionsträger, wobei das Ventil im Bereich des Funktionsträgers angeordnet ist. Somit ist nicht nur der Reinkanal, sondern auch der Dom, der an seinem oberen bzw. freien Ende die Führungskontur aufweist, in den Funktionsträger integriert. Dies bietet den großen Vorteil, dass das Ventil im Reinkanal, das heißt im Funktionsträger vormontiert und als vorgefertigte Baugruppe zum Einbau in die Filtereinrichtung angeliefert werden kann.

Zweckmäßig sind an der Ventilkörperstange eine Rastkontur, beispielsweise elastische Rastnasen, und in dem Reinkanal eine Gegenrastkontur, insbesondere ein Hinterschnitt, vorgesehen, so dass die in den Reinkanal eingeschobene Ventilkörperstange und damit auch der Ventilkörper über die mit der Gegenrastkontur verrastete Rastkontur verliersicher gehalten ist. Die Rastkontur kann dabei beispielsweise durch radial nach außen von der Ventilkörperstange abstehende Rastnasen gebildet sein, während die Gegenrastkontur einen radial nach innen ragenden Kragen im Reinkanal bildet. Hierdurch ist eine vergleichsweise einfache Vormontage des Ventils ohne zusätzliche Bauteile im Reinkanal möglich, und zwar unabhängig davon, ob der Reinkanal filtergehäuseseitig oder in einem Funktionsträger angeordnet ist.

Zweckmäßig ist eine Schraubenfeder vorgesehen, die den Ventilkörper in seine Schließstellung vorspannt. An dem Ventilkörper ist dabei eine Haltekontur zur Halterung der Schraubenfeder vorgesehen, wobei die Haltekontur eine kreuzförmige Gestalt aufweist und wobei an zumindest zwei gegenüberliegenden Flügeln der Haltekontur Hinterschnitte zur Arretierung der Schraubenfeder angeordnet sind. Durch die lediglich an zwei Flügeln vorgesehenen Hinterschnitte kann ein Montageaufwand bzw. ein Arretierungsaufwand und auch eine Montagekraft der Schraubenfeder am Ventilkörper gering gehalten werden. Hierdurch lässt sich die Montage deutlich vereinfachen.

Bei einer vorteilhaften Weiterbildung der erfindungsgemäßen Lösung, ist die Führungskontur am Dom in der Art einer kreisförmigen Rampe ausgebildet, wobei die Axialnut zwischen der höchsten und der tiefsten Stelle der Rampe angeordnet ist. Bei einem Aufsetzen des Ringfilterelements gleitet dieses somit mit seinem Führungselement entlang der kreisförmigen Rampe bis es die Axialnut erreicht und in diese eingeschoben werden kann, oder hineinrutscht. Dieser Einschiebe- bzw. Gleitvorgang kann dabei bspw. mittels eines Aufschraubvorgangs des Filtergehäusedeckels auf dem Filtergehäusetopf erzeugt werden. Alternativ ist auch denkbar, dass die Führungskontur am Dom in der Art einer abgeschrägten Kanüle ausgebildet ist, wobei an der tiefsten Stelle die Axialnut angeordnet ist. In diesem Fall kann ebenfalls ein besonders leichtgängiges Zuführen des Führungselements zur Axialnut und damit ein besonders leichtgängiges Zuführen des Pins zum ersten Kanal erreicht werden. Im Unterschied zu aus dem Stand der Technik bekannten Filtereinrichtungen, bei welchen der ringfilterelementseitige Pin oftmals als Gleitelement benutzt wurde, muss der Pin nun eine derartige Gleiteigenschaft nicht mehr aufweisen und kann deshalb bspw. auch aus einem elastischen Material, insbesondere aus Gummi, ausgebildet sein.

Die vorliegende Erfindung beruht weiter auf dem allgemeinen Gedanken, einen Funktionsträger für eine zuvor beschriebene Filtereinrichtung anzugeben, mit einem rohrförmigen Dom, an dessen freiem Ende eine Führungskontur mit einer Axialnut vorgesehen ist, und mit einem Reinkanal, in dem ein Ventil mit einem Ventilsitz und einem dagegen in Schließstellung federvorspannbaren Ventilkörper angeordnet ist. Hierdurch kann eine vorfertigbare Baugruppe aus Funktionsträger und Ventil geschaffen werden, wodurch sich ein Montageaufwand bei der Endmontage verringert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung bei geöffnetem Ventil,
- Fig. 2: eine Darstellung wie in Fig. 1, jedoch ohne eingesetztem Ringfilterelement und damit mit geschlossenem Ventil,
- Fig. 3: eine Detaildarstellung des Ventils in geöffnetem Zustand aus Fig. 1,
- Fig. 4: eine Detaildarstellung des geschlossenen Ventils aus Fig. 2,
- Fig. 5: eine Detaildarstellung einer Schraubenfeder am Ventilkörper,
- Fig. 6: eine Ansicht von schräg unten auf den Ventilkörper,
- Fig. 7: eine Detaildarstellung eines im Reinkanal verrasteten Ventilkörpers,
- Fig. 8: eine Schnittdarstellung durch den Reinkanal mit darin angeordneter Ventilkörperstange,
- Fig. 9: eine Schnittdarstellung durch einen Reinkanal mit einer >Hülse als Ventilkörper,
- Fig.10: eine Ansicht auf den gem. der Fig. 9 dargestellten oberen Teil des Funktionsträgers.

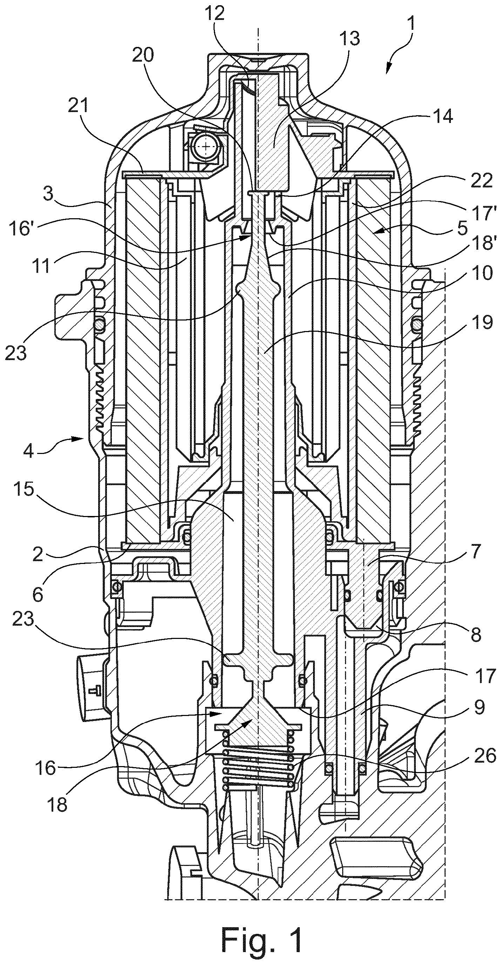

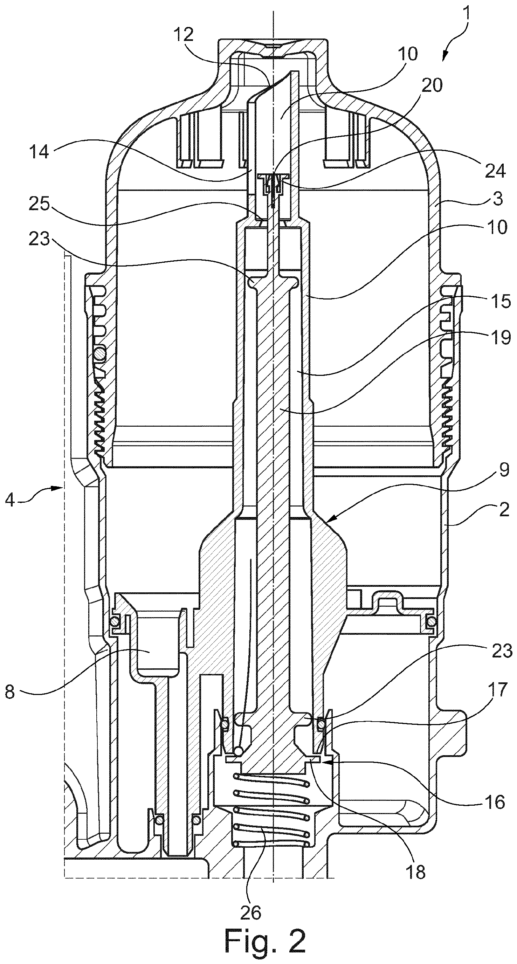

Entsprechend den Fig. 1 und 2, weist eine erfindungsgemäße Filtereinrichtung 1, welche beispielsweise als Öl- oder als Kraftstofffilter ausgebildet ist, ein aus einem Filtergehäusetopf 2 und einem damit verschraubten Filtergehäusedeckel 3 bestehendes Filtergehäuse 4 auf, in welchem ein Ringfilterelement 5 (vgl. Fig. 1) angeordnet ist, das an einer unteren Endscheibe 6 einen exzentrischen und axial abstehenden Pin 7 aufweist, mittels welchem das Ringfilterelement 5 bei montierter Filtereinrichtung 1 in einen ersten Kanal 8 eingreift. Dieser erste Kanal 8 kann dabei im Filtergehäusetopf 2 oder in einem Funktionsträger 9 angeordnet sein. Am Filtergehäusetopf 2 bzw. an dem Funktionsträger 9, hier am Funktionsträger 9, ist zudem ein rohrförmiger Dom 10 angeordnet, der bei montierter Filtereinrichtung 1 in einen Innenraum 11 des Ringfilterelements 5 eingreift. An einem freien Ende des rohrförmigen Doms 10, hier an seinem oberen Ende, ist eine Führungskontur 12 vorgesehen, die mit einem am Ringfilterelement 5 angeordneten Führungselement 13 zusammenwirkt und ein erstes Schlüssel-Schloss-Prinzip bildet. Die domseitige Führungskontur 12 besitzt eine Axialnut 14, zur welcher das Führungselement 13 bei der Montage der Filtereinrichtung 1 hinführbar ist, wobei die Axialnut 14 relativ zum Pin 7 so angeordnet ist, dass dieser in den ersten Kanal 8 ausschließlich dann einführbar ist, sofern das Führungselement 13 in die Axialnut 14 eintritt. Durch das Führungselement 13, die Axialnut 14 und den relativ hierzu an einer vordefinierten Stelle angeordneten Pin 7 wird dabei das erste Schlüssel-Schloss-Prinzip realisiert.

Erfindungsgemäß ist nun zusätzlich ein Reinkanal 15 zur Abführung von gefiltertem Fluid vorgesehen, in dem ein Ventil 16 mit einem Ventilsitz 17 und einem dagegen in Schließstellung federvorgespannten Ventilkörper 18 angeordnet ist. Erfindungsgemäß wirkt nun das Führungselement 13 derart mit dem Ventilkörper 18 bzw. einem Teil hiervon zusammen, dass das Führungselement 13 beim Einschieben in die Axialnut 14 den Ventilkörper 18 in seine Öffnungsstellung überführt, wie dies gemäß der Fig. 1 dargestellt ist. Das Führungselement 13 bildet somit zusammen mit der Axialnut 14 und dem Ventilkörper 18 das zweite Schlüssel-Schloss-System, welches ebenfalls aufgeschlossen werden muss, um einen funktionssicheren Betrieb der Filtereinrichtung 1 zu gewährleisten.

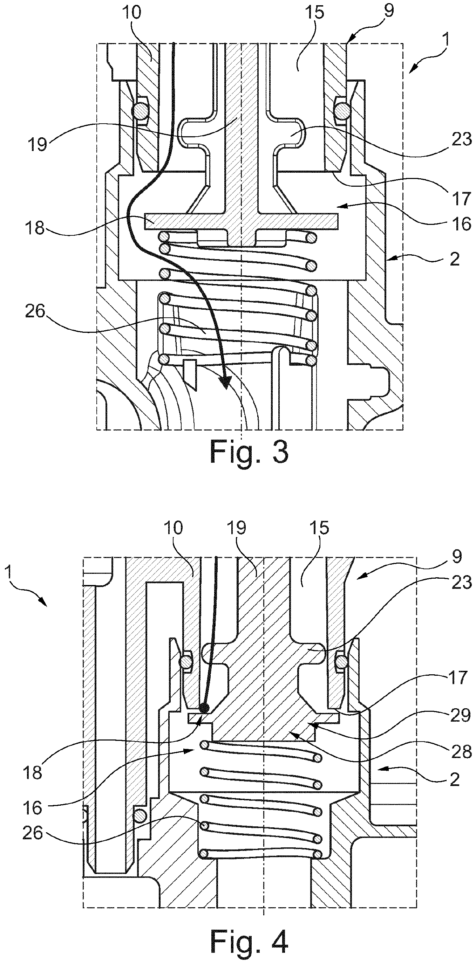

Ist somit kein Ringfilterelement 5 in die Filtereinrichtung 1 eingesetzt, wie dies gemäß den Fig. 2 und 4 dargestellt ist, ist weder der erste Kanal 8 verschlossen, noch das Ventil 16 geöffnet, wodurch kein Betrieb der Filtereinrichtung 1 möglich ist.

Betrachtet man die Fig. 1 bis 5 sowie 7 und 8 weiter, so kann man erkennen, dass der Ventilkörper 18 eine Ventilkörperstange 19 aufweist, die im Wesentlichen axial durch den Reinkanal 15 verläuft und an ihrem oberen Ende eine Anschlagsfläche 20 für das Führungselement 13 besitzt.

Der Dom 10 bildet dabei zumindest bereichsweise den Reinkanal 15 und durchgreift den Innenraum 11 des Ringfilterelements 5. Das Führungselement 13 wiederum ist an einer oberen, geschlossenen Endscheibe 21 des Ringfilterelements 5 angeordnet und insbesondere einstückig mit dieser ausgebildet. Alternativ ist auch denkbar, dass das Führungselement 13 an einer Innenzarge 22 oder an einer unteren Endscheibe 6 des Ringfilterelements 5 angeordnet ist. Das Führungselement 13 kann auch einen unteren Anschlag aufweisen, um die Ventilkörperstange 19 bzw. die Anschlagsfläche 20 zu betätigen. Insbesondere kann das Führungselement 13 im oberen Drittel/Bereich, beispielsweise im Bereich der oberen Endscheibe 21, des Ringfilterelements 5 angeordnet sein.

An der Ventilkörperstange 19 können darüber hinaus Führungselemente 23 zum Führen der Ventilkörperstange 19 in dem Reinkanal 15 angeordnet sein, wobei die Führungselemente 23 beispielsweise als ringförmige Kragen ausgebildet sein können.

Wie gesagt, kann der Reinkanal 15 auch zumindest teilweise in einem in das Filtergehäuse 4 einsetzbaren Funktionsträger 9 verlaufen, wobei in diesem Fall das Ventil 16 im Bereich des Funktionsträgers 9 angeordnet ist. Darüber hinaus vorgesehen sein kann, dass zusätzlich zum Ventil 16 eine Zentriereinrichtung 16' (vgl. Fig. 1) im Reinkanal 15 vorgesehen ist, wobei diese axial versetzt, insbesondere oberhalb, des Ventils 16 angeordnet ist. Hierbei ist beispielsweise eine konische Einführschräge 17' vorgesehen, die ein Durchführen der Ventilkörperstange 19 bzw. der Anschlagsfläche 20 erleichtert.

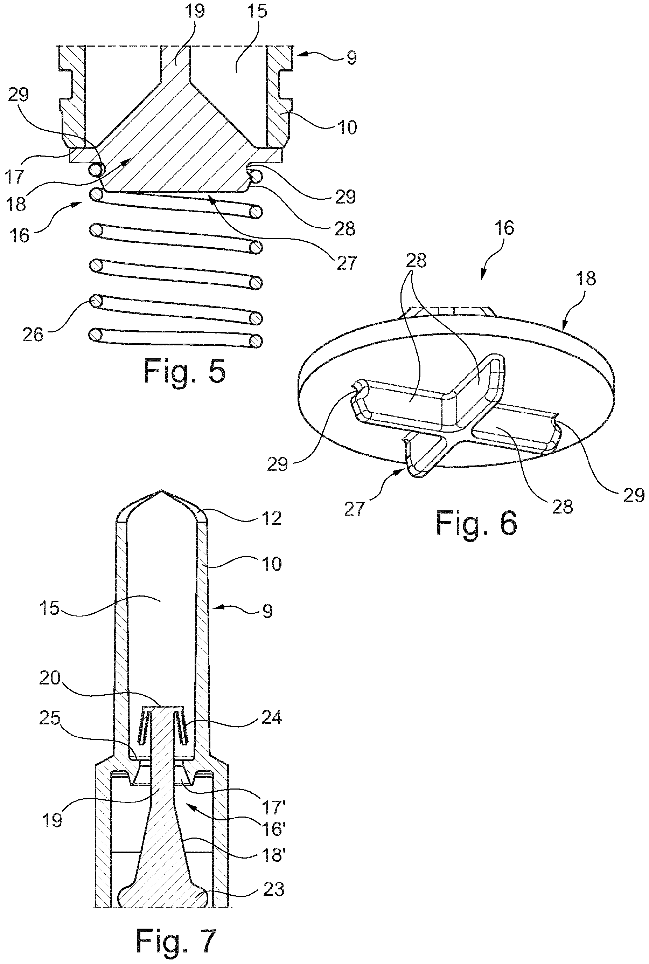

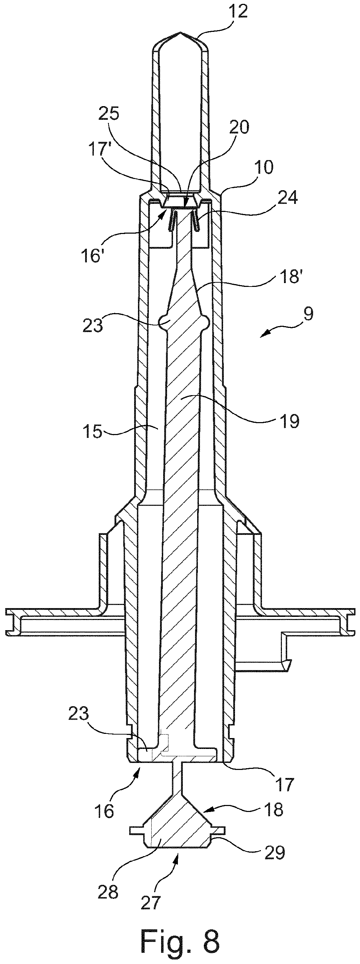

Rein theoretisch kann die Ventilkörperstange 19 auch wie in Fig. 2 dargestellt ausgebildet sein, wobei in diesem Fall die Ventilkörperstange 19 eine Rastkontur 24 aufweist, die insbesondere als elastische Rastnasen ausgebildet sind. Im Reinkanal 15 ist hierzu eine Gegenrastkontur 25 (vgl. insbesondere auch die Fig. 7 und 8) vorgesehen, so dass die in den Reinkanal 15 eingeschobene Ventilkörperstange 19 und damit der Ventilkörper 18 über die mit der Gegenrastkontur 25 verrastete Rastkontur 24 verliersicher am Funktionsträger 9 gehalten ist.

Zur Vorspannung des Ventilkörpers 18 in seine Schließstellung, ist eine Feder, insbesondere eine Schraubenfeder 26 vorgesehen, wobei am Ventilkörper 18 eine Haltekontur 27 zur Halterung der Schraubenfeder 26 angeordnet ist. Diese weist eine kreuzförmige Gestalt auf (vgl. Fig. 5 und 6), wobei an zumindest zwei gegenüberliegenden Flügeln 28 Hinterschnitte 29 zur Arretierung der Schraubenfeder 26 angeordnet sind. Hierdurch ist ein vergleichsweise einfaches Aufclipsen der Schraubenfeder 26 auf die Haltekontur 27 und damit eine Arretierung bzw. Fixierung der Schraubenfeder 26 an der Haltekontur 27 bzw. am Ventilkörper 18 ermöglich. Die lediglich an zwei Flügeln 28 vorgesehenen Hinterschnitte 29 erleichtern die Montage der Schraubenfeder 26 am Ventilkörper 18.

Betrachtet man nochmals das Führungselement 13, so kann dieses beispielsweise als ein radial nach innen gerichtetes Führungsschwert ausgebildet sein (vgl. Fig. 1), wobei das Führungselement 13 in diesem Fall einstückig mit der oberen Endscheibe 21 des Ringfilterelements 5 ausgebildet ist. Die Führungskontur 12 kann in der Art einer kreisförmigen Rampen ausgebildet sein, wobei die Axialnut 14 zwischen der höchsten und der tiefsten Stelle der Rampe angeordnet ist, wobei alternativ auch denkbar ist, dass die Führungskontur 12 in der Art einer abgeschrägten Kanüle ausgebildet ist (vgl. die Fig. 1, 2 sowie 7 und 8), wobei in diesem Fall die Axialnut 14 an der tiefsten Stelle angeordnet ist.

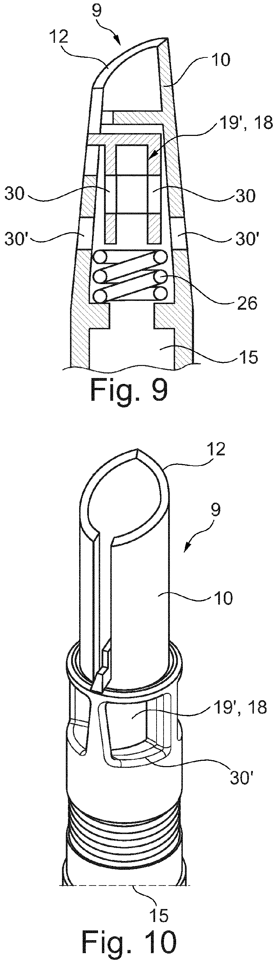

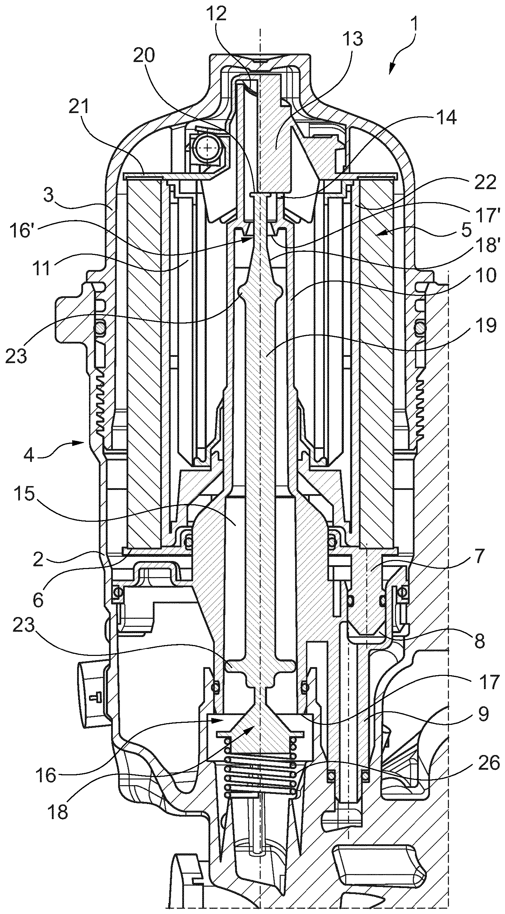

Betrachtet man die Fig. 9 und 10, so kann man erkennen, dass der dort abgebildete Ventilkörper 18 eine Hülse 19' ist. Hierbei weist die Hülse 19' mantelseitige Öffnungen 30 auf, die in einer Offenstellung mit mantelseitigen Öffnungen 30' im rohrförmigen Dom 10 deckungsgleich sind. Durch eine bodenseitige Öffnung in der Hülse 19' gelangt gefilterte Flüssigkeit in den Reinkanal 15.

Ebenfalls unter Schutz gestellt werden soll mit der vorliegenden Erfindung der Funktionsträger 9 mit dem darin angeordneten Ventil 16. Auch ein Ringfilterelement 5 soll unter Schutz gestellt sein, welches an einer oberen Endscheibe 21 bzw. generell in einem oberen an die obere Endscheibe 21 angrenzenden Bereich ein solches Führungselement 13 aufweist und welches in der erfindungsgemäßen Filtereinrichtung 1 einsetzbar ist. Ein derartiges Ringfilterelement 5 kann beispielsweise als Kraftstofffilter oder als Ölfilter ausgebildet sein.

## Patentansprüche

1. Filtereinrichtung (1), insbesondere ein Öl- oder Kraftstofffilter,
- mit einem einen Filtergehäusetopf (2) und einen Filtergehäusedeckel (3) aufweisenden Filtergehäuse (4), in welchem ein Ringfilterelement (5) angeordnet ist, das an einer unteren Endscheibe (6) einen axial abstehenden Pin (7) aufweist, mittels welchem es bei montierter Filtereinrichtung (1) in einen ersten Kanal (8) eingreift,
- mit einem rohrförmigen Dom (10), der bei montierter Filtereinrichtung (1) in einen Innenraum (11) des Ringfilterelements (5) eingreift,
- wobei an einem freien Ende des rohrförmigen Doms (10) eine Führungskontur (12) vorgesehen ist, die mit einem am Ringfilterelement (5) angeordneten Führungselement (13) zusammenwirkt,
- wobei die domseitige Führungskontur (12) eine Axialnut (14) aufweist, zu welcher das Führungselement (13) bei der Montage der Filtereinrichtung (1) hinführbar ist, und die relativ zum Pin (7) so angeordnet ist, dass dieser in den ersten Kanal (8) einführbar ist, sofern das Führungselement (13) in die Axialnut (14) eintritt,
- mit einem Reinkanal (15),
**dadurch gekennzeichnet,**
- **dass** in dem Reinkanal (15) ein Ventil (16) mit einem Ventilsitz (17) und einem dagegen in Schließstellung federvorgespannten Ventilkörper (18) angeordnet ist,
- **dass** das Führungselement (13) derart mit dem Ventilkörper (18) zusammenwirkt, dass das Führungselement (13) bei einem Einschieben in die Axialnut (14) den Ventilkörper (18) in eine Öffnungsstellung überführt.

2. Filtereinrichtung nach Anspruch 1,
**dadurch gekennzeichnet,**
**dass** der Ventilkörper (18) eine Ventilkörperstange (19) oder eine Hülse (19') aufweist.

3. Filtereinrichtung nach Anspruch 1 oder 2,
**dadurch gekennzeichnet,**
**dass** der Dom (10) zumindest bereichsweise den Reinkanal (15) bildet und das Ringfilterelement (5) in seinem Innenraum (11) durchgreift.

4. Filtereinrichtung nach einem der Ansprüche 1 bis 3,
**dadurch gekennzeichnet,**
**dass** das Führungselement (13) an einer oberen, geschlossenen Endscheibe (21) oder an einer stützstrukturartigen Innenzarge (22) des Ringfilterelements (5) angeordnet, insbesondere sogar einstückig mit dieser ausgebildet, ist.

5. Filtereinrichtung nach einem der Ansprüche 2 bis 4,
**dadurch gekennzeichnet,**
**dass** an der Ventilkörperstange (19) Führungselemente (23) zum Führen der Ventilkörperstange (19) in dem Reinkanal (15) angeordnet sind.

6. Filtereinrichtung nach einem der vorhergehenden Ansprüche,
**dadurch gekennzeichnet,**
**dass** der Reinkanal (15) zumindest teilweise in einem in das Filtergehäuse (2) einsetzbaren Funktionsträger (9) verläuft und das Ventil (16) im Bereich des Funktionsträgers (9) angeordnet ist.

7. Filtereinrichtung nach einem der Ansprüche 2 bis 5 und 6,
**dadurch gekennzeichnet,**
**dass** an der Ventilkörperstange (19) eine Rastkontur (24), insbesondere elastische Rastnasen, und in dem Reinkanal (15) eine Gegenrastkontur (25), insbesondere ein Hinterschnitt, vorgesehen sind, sodass die in den Reinkanal (15) eingeschobene Ventilkörperstange (19) und damit der Ventilkörper (18) über die mit der Gegenrastkontur (25) verrastete Rastkontur (24) verliersicher gehalten ist.

8. Filtereinrichtung nach einem der Ansprüche 1 bis 7,
**dadurch gekennzeichnet,**
- **dass** eine Schraubenfeder (26) vorgesehen ist, die den Ventilkörper (18) in seine Schließstellung vorspannt,
- **dass** an dem Ventilkörper (18) eine Haltekontur (27) mit einer kreuzförmigen Gestalt zur Halterung der Schraubenfeder (26) vorgesehen ist, wobei an zumindest zwei gegenüberliegenden Flügeln (28) Hinterschnitte (29) zur Arretierung der Schraubenfeder (26) angeordnet sind.

9. Filtereinrichtung nach einem der vorhergehenden Ansprüche,
**dadurch gekennzeichnet,**
**dass** das Führungselement (13) als ein radial nach innen gerichtetes Führungsschwert ausgebildet ist.

10. Filtereinrichtung nach einem der Ansprüche 1 bis 9,
**dadurch gekennzeichnet,**
- **dass** die Führungskontur (12) in der Art einer kreisförmigen Rampe ausgebildet ist, wobei die Axialnut (14) zwischen der höchsten und der tiefsten Stelle der Rampe angeordnet ist, oder
- **dass** die Führungskontur (12) in der Art einer abgeschrägten Kanüle ausgebildet ist, wobei die Axialnut (14) an der tiefsten Stelle angeordnet ist.

11. Funktionsträger (9) einer Filtereinrichtung (1) nach einem der vorhergehenden Ansprüche,
- mit einem rohrförmigen Dom (10), an dessen freiem Ende eine Führungskontur (12) mit einer Axialnut vorgesehen ist,
- mit einem Reinkanal (15), in dem ein Ventil (16) mit einem Ventilsitz (17) und einem dagegen in Schließstellung federvorspannbaren Ventilkörper (18) angeordnet ist.

12. Funktionsträger nach Anspruch 11,
**dadurch gekennzeichnet,**
- **dass** der Ventilkörper (18) eine Ventilkörperstange (19) oder eine Hülse (19') aufweist, und/oder
- **dass** der Dom (10) zumindest bereichsweise den Reinkanal (15) bildet.

13. Funktionsträger nach Anspruch 11 oder 12,
**dadurch gekennzeichnet,**
**dass** an der Ventilkörperstange (19) Führungselemente (23) zum Führen der Ventilkörperstange (19) in dem Reinkanal (15) angeordnet sind.

14. Funktionsträger nach einem der Ansprüche 12 oder 13,
**dadurch gekennzeichnet,**
**dass** an der Ventilkörperstange (19) eine Rastkontur (24), insbesondere elastische Rastnasen, und in dem Reinkanal (15) eine Gegenrastkontur (25), insbesondere ein Hinterschnitt, vorgesehen sind, sodass die in den Reinkanal (15) eingeschobene Ventilkörperstange (19) und damit der Ventilkörper (18) über die mit der Gegenrastkontur (25) verrastete Rastkontur (24) verliersicher gehalten ist.

15. Funktionsträger nach einem der Ansprüche 11 bis 14,
**dadurch gekennzeichnet,**
**dass** an dem Ventilkörper (18) eine Haltekontur (27) mit einer kreuzförmigen Gestalt zur Halterung der Schraubenfeder (26) vorgesehen ist, wobei an zumindest zwei gegenüberliegenden Flügeln (28) Hinterschnitte (29) zur Arretierung der Schraubenfeder (26) angeordnet sind.

16. Verwendung eines Ringfilterelements (5) in einer Filtereinrichtung (1), insbesondere in einem Öl- oder Kraftstofffilter,
- wobei das Ringfilterelement (5) an einer unteren Endscheibe (6) einen axial abstehenden Pin (7) aufweist, mittels welchem es bei montierter Filtereinrichtung (1) in einen ersten Kanal (8) eingreift,
- wobei das Ringfilterelement (5) ein Führungselement (13) aufweist, das an einer oberen, geschlossenen Endscheibe (21) oder an einer stützstrukturartigen Innenzarge (22) des Ringfilterelements (5) angeordnet, insbesondere sogar einstückig mit dieser ausgebildet, ist,
- wobei die Filtereinrichtung (1)
- ein einen Filtergehäusetopf (2) und einen Filtergehäusedeckel (3) aufweisendes Filtergehäuse (4) besitzt, in welchem das Ringfilterelement (5) anordenbar ist,
- einen rohrförmigen Dom (10) aufweist, der bei montierter Filtereinrichtung (1) in einen Innenraum (11) des Ringfilterelements (5) eingreift,
wobei an einem freien Ende des rohrförmigen Doms (10) eine Führungskontur (12) vorgesehen ist, die mit dem am Ringfilterelement (5) angeordneten Führungselement (13) zusammenwirkt,
- einen Reinkanal (15) aufweist,
- wobei die domseitige Führungskontur (12) eine Axialnut (14) aufweist, zu welcher das Führungselement (13) bei der Montage der Filtereinrichtung (1) hinführbar ist, und die relativ zum Pin (7) so angeordnet ist, dass dieser in den ersten Kanal (8) einführbar ist, sofern das Führungselement (13) in die Axialnut (14) eintritt,
- wobei in dem Reinkanal (15) ein Ventil (16) mit einem Ventilsitz (17) und einem dagegen in Schließstellung federvorgespannten Ventilkörper (18) angeordnet ist,
- wobei das Führungselement (13) derart mit dem Ventilkörper (18) zusammenwirkt, dass das Führungselement (13) bei einem Einschieben in die Axialnut (14) den Ventilkörper (18) in eine Öffnungsstellung überführt.

17. Verwendung nach Anspruch 16,
**dadurch gekennzeichnet, dass**
das Führungselement (13) einen unteren Anschlag aufweist, um eine Ventilkörperstange (19) des Ventilkörpers (18) zu betätigen.

18. Verwendung nach Anspruch 16 oder 17,
**dadurch gekennzeichnet, dass**
das Führungselement (13) im oberen Drittel/Bereich, insbesondere im Bereich der oberen Endscheibe (21), des Ringfilterelements (5) angeordnet ist.

## Claims

1. Filter device (1), in particular an oil or fuel filter,
- with a filter housing (4) having a filter housing jar (2) and a filter housing cover (3), in which filter housing a ring filter element (5) is arranged which has an axially projecting pin (7) on a lower end disc (6), by means of which pin it engages in a first channel (8) when the filter device (1) is mounted,
- with a tubular dome (10), which engages in an inner space (11) of the ring filter element (5) when the filter device (1) is mounted,
- wherein a guide contour (12) is provided at a free end of the tubular dome (10) and cooperates with a guide element (13) arranged on the ring filter element (5),
- wherein the dome-side guide contour (12) has an axial groove (14) towards which the guide element (13) can be guided during the assembly of the filter device (1), and which is arranged relative to the pin (7) such that the latter can be inserted into the first channel (8), provided the guide element (13) enters the axial groove (14),
- with a clean channel (15),
**characterised in that**
- a valve (16) with a valve seat (17) and a valve body (18) spring-biased against it in the closed position is arranged in the clean channel (15),
- the guide element (13) cooperates with the valve body (18) such that the guide element (13) transfers the valve body (18) into an open position when pushed into the axial groove (14).

2. Filter device according to claim 1,
**characterised in that**
the valve body (18) has a valve body rod (19) or a sleeve (19').

3. Filter device according to claim 1 or 2,
**characterised in that**
the dome (10) forms the clean channel (15) at least in some areas and penetrates the ring filter element (5) in its inner space (11).

4. Filter device according to any one of claims 1 to 3,
**characterised in that**
the guide element (13) is arranged on an upper, closed end disc (21) or on a support-structure-like inner frame (22) of the ring filter element (5), in particular is even formed integrally with the latter.

5. Filter device according to any one of claims 2 to 4,
**characterised in that**
guide elements (23) for guiding the valve body rod (19) in the clean channel (15) are arranged on the valve body rod (19).

6. Filter device according to any one of the preceding claims,
**characterised in that**
the clean channel (15) extends at least partly in a functional carrier (9) which can be inserted into the filter housing (2) and the valve (16) is arranged in the region of the functional carrier (9).

7. Filter device according to any one of claims 2 to 5 and 6,
**characterised in that**
a detent contour (24), in particular elastic latching lugs, is provided on the valve body rod (19), and a locking contour (25), in particular an undercut, is provided in the clean channel (15), so that the valve body rod (19) inserted into the clean channel (15) and thus the valve body (18) are held securely via the detent contour (24) latched to the locking contour (25).

8. Filter device according to any one of claims 1 to 7,
**characterised in that**
- a helical spring (26) is provided which biases the valve body (18) into its closed position,
- a retaining contour (27) with a cross-like form is provided on the valve body (18) for retaining the helical spring (26), wherein undercuts (29) for locking the helical spring (26) are arranged on at least two opposite wings (28).

9. Filter device according to any one of the preceding claims,
**characterised in that**
the guide element (13) is formed as a radially inwardly directed guide blade.

10. Filter device according to any one of claims 1 to 9,
**characterised in that**
- the guide contour (12) is formed in the manner of a circular ramp, wherein the axial groove (14) is arranged between the highest and lowest point of the ramp, or
- the guide contour (12) is formed in the manner of a bevelled cannula, wherein the axial groove (14) is arranged at the lowest point.

11. Functional carrier (9) of a filter device (1) according to any one of the preceding claims,
- with a tubular dome (10), at the free end of which a guide contour (12) with an axial groove is provided,
- with a clean channel (15), in which a valve (16) with a valve seat (17) and a valve body (18) which can be spring-biased against it in the closed position is arranged.

12. Functional carrier according to claim 11,
**characterised in that**
- the valve body (18) has a valve body rod (19) or a sleeve (19'), and/or
- the dome (10) forms the clean channel (15) at least in some areas.

13. Functional carrier according to claim 11 or 12,
**characterised in that**
guide elements (23) for guiding the valve body rod (19) in the clean channel (15) are arranged on the valve body rod (19).

14. Functional carrier according to any one of claims 12 or 13,
**characterised in that**
a detent contour (24), in particular elastic latching lugs, is provided on the valve body rod (19), and a locking contour (25), in particular an undercut, is provided in the clean channel (15), so that the valve body rod (19) inserted into the clean channel (15) and thus the valve body (18) are held securely via the detent contour (24) latched to the locking contour (25).

15. Functional carrier according to any one of claims 11 to 14,
**characterised in that**
a retaining contour (27) with a cross-like form is provided on the valve body (18) for retaining the helical spring (26), wherein undercuts (29) for locking the helical spring (26) are arranged on at least two opposite wings (28).

16. Use of a ring filter element (5) in a filter device (1),
in particular in an oil or fuel filter,
- wherein the ring filter element (5) has an axially projecting pin (7) on a lower end disc (6), by means of which it engages in a first channel (8) when the filter device (1) is mounted,
- wherein the ring filter element (5) comprises a guide element (13) which is arranged on an upper, closed end disc (21) or on a support-structure-like inner frame (22) of the ring filter element (5), in particular even formed integrally therewith,
- wherein the filter device (1)
- has a filter housing (4) having a filter housing jar (2) and a filter housing cover (3), in which the ring filter element (5) can be arranged,
- has a tubular dome (10) which engages in an inner space (11) of the ring filter element (5), when the filter device (1) is mounted,
wherein a guide contour (12) is provided at a free end of the tubular dome (10) and cooperates with the guide element (13) arranged on the ring filter element (5),
- has a clean channel (15),
- wherein the dome-side guide contour (12) has an axial groove (14) towards which the guide element (13) can be guided during the assembly of the filter device (1), and which is arranged relative to the pin (7) such that the latter can be inserted into the first channel (8), provided the guide element (13) enters the axial groove (14),
- wherein a valve (16) with a valve seat (17) and a valve body (18) spring-biased against it in the closed position is arranged in the clean channel (15),
- wherein the guide element (13) cooperates with the valve body (18) such that the guide element (13) transfers the valve body (18) into an open position when pushed into the axial groove (14).

17. Use according to claim 16,
**characterised in that**
the guide element (13) has a lower stop to actuate a valve body rod (19) of the valve body (18).

18. Use according to claim 16 or 17,
**characterised in that**
the guide element (13) is arranged in the upper third/region, in particular in the region of the upper end disc (21), of the ring filter element (5).

## Revendications

1. Dispositif de filtration (1), en particulier un filtre à huile ou à carburant,
- avec un boîtier de filtre (4) présentant un pot de boîtier de filtre (2) et un couvercle de boîtier de filtre (3), dans lequel est agencé un élément de filtre annulaire (5), qui présente sur une rondelle d'extrémité inférieure (6) une goupille (7) dépassant en saillie axialement, au moyen de laquelle il s'engage dans un premier canal (8) lorsque le dispositif de filtre (1) est monté,
- avec un mandrin tubulaire (10) qui, lorsque le dispositif de filtration (1) est monté, s'engage dans un espace intérieur (11) de l'élément de filtration annulaire (5),
- dans lequel un contour de guidage (12) est prévu à une extrémité libre du mandrin tubulaire (10), lequel contour interagit avec un élément de guidage (13) agencé sur l'élément de filtration annulaire (5),
- dans lequel le contour de guidage (12) côté mandrin présente une rainure axiale (14) vers laquelle l'élément de guidage (13) peut être guidé lors du montage du dispositif de filtre (1) et qui est agencée par rapport à la broche (7) de sorte que celle-ci peut être introduite dans le premier canal (8) à condition que l'élément de guidage (13) s'insère dans la rainure axiale (14),
- avec un canal pur (15),
**caractérisé en ce que**
- une soupape (16) avec un siège de soupape (17) et un corps de soupape (18) précontraint par ressort contre celui-ci en position de fermeture est agencée dans le canal pur (15),
- l'élément de guidage (13) interagit avec le corps de soupape (18) de sorte que l'élément de guidage (13) transfère le corps de soupape (18) dans une position d'ouverture lors d'une insertion dans la rainure axiale (14).

2. Dispositif de filtration selon la revendication 1,
**caractérisé en ce que**
le corps de soupape (18) présente une tige de corps de soupape (19) ou une douille (19').

3. Dispositif de filtration selon la revendication 1 ou 2,
**caractérisé en ce que**
le mandrin (10) forme au moins par zones le canal pur (15) et traverse l'élément de filtration annulaire (5) dans son espace intérieur (11).

4. Dispositif de filtration selon l'une quelconque des revendications 1 à 3,
**caractérisé en ce que**
l'élément de guidage (13) est agencé sur un disque d'extrémité supérieur fermé (21) ou sur un cadre intérieur (22) en forme de structure d'appui de l'élément de filtre annulaire (5), en particulier même réalisé d'un seul tenant avec celui-ci.

5. Dispositif de filtration selon l'une quelconque des revendications 2 à 4,
**caractérisé en ce que**
des éléments de guidage (23) sont agencés sur la tige de corps de soupape (19) pour guider la tige de corps de soupape (19) dans le canal pur (15).

6. Dispositif de filtration selon l'une quelconque des revendications précédentes,
**caractérisé en ce que**
le canal pur (15) s'étend au moins partiellement dans un support fonctionnel (9) pouvant être inséré dans le boîtier de filtre (2) et la soupape (16) est agencée dans la zone du support fonctionnel (9).

7. Dispositif de filtration selon l'une quelconque des revendications 2 à 5 et 6,
**caractérisé en ce que**
un contour de blocage (24), en particulier des ergots de blocage élastiques, est prévu sur la tige de corps de soupape (19) et un encliquetage antagoniste (25), en particulier une contre-dépouille, est prévu dans le canal propre (15), de sorte que la tige de corps de soupape (19) insérée dans le canal propre (15) et donc le corps de soupape (18) soient maintenus de manière sécurisée via le contour de blocage (24) bloqué au moyen de l'encliquetage antagoniste (25).

8. Dispositif de filtration selon l'une quelconque des revendications 1 à 7,
**caractérisé en ce que**
- un ressort hélicoïdal (26) est prévu, lequel précontraint le corps de soupape (18) dans sa position de fermeture,
- un contour de retenue (27) de forme cruciforme est prévu sur le corps de soupape (18) pour retenir le ressort hélicoïdal (26), dans lequel des contre-dépouilles (29) sont agencées sur au moins deux ailes (28) opposées pour bloquer le ressort hélicoïdal (26).

9. Dispositif de filtration selon l'une quelconque des revendications précédentes,
**caractérisé en ce que**
l'élément de guidage (13) est réalisé sous la forme d'une lame de guidage orientée radialement vers l'intérieur.

10. Dispositif de filtration selon l'une quelconque des revendications 1 à 9,
**caractérisé en ce que**
- le contour de guidage (12) est réalisé à la manière d'une rampe circulaire, dans lequel la rainure axiale (14) est agencée entre le point le plus haut et le point le plus bas de la rampe, ou
- **en ce que** le contour de guidage (12) est réalisé à la manière d'une canule biseautée, dans lequel la rainure axiale (14) est agencée à l'endroit le plus profond.

11. Support fonctionnel (9) d'un dispositif de filtration (1) selon l'une quelconque des revendications précédentes,
- avec un mandrin tubulaire (10), à l'extrémité libre duquel est prévu un contour de guidage (12) avec une rainure axiale,
- avec un canal pur (15), dans lequel est agencée une soupape (16) avec un siège de soupape (17) et un corps de soupape (18) pouvant être précontraint par ressort contre celui-ci en position de fermeture.

12. Support fonctionnel selon la revendication 11,
**caractérisé en ce que**
- le corps de soupape (18) présente une tige de corps de soupape (19) ou une douille (19'), et/ou
- le mandrin (10) forme au moins par zones le canal pur (15).

13. Support fonctionnel selon la revendication 11 ou 12,
**caractérisé en ce que**
des éléments de guidage (23) sont agencés sur la tige de corps de soupape (19) pour guider la tige de corps de soupape (19) dans le canal pur (15).

14. Support fonctionnel selon l'une quelconque des revendications 12 ou 13,
**caractérisé en ce que**
un contour de blocage (24), en particulier des ergots de blocage élastiques, est prévu sur la tige de corps de soupape (19) et un encliquetage antagoniste (25), en particulier une contre-dépouille, est prévu dans le canal propre (15), de sorte que la tige de corps de soupape (19) insérée dans le canal propre (15) et donc le corps de soupape (18) soient maintenus de manière sécurisée via le contour de blocage (24) bloqué au moyen de l'encliquetage antagoniste (25).

15. Support fonctionnel selon l'une quelconque des revendications 11 à 14,
**caractérisé en ce que**
un contour de retenue (27) de forme cruciforme est prévu sur le corps de soupape (18) pour retenir le ressort hélicoïdal (26), dans lequel des contre-dépouilles (29) sont agencées sur au moins deux ailes (28) opposées pour bloquer le ressort hélicoïdal (26).

16. Utilisation d'un élément de filtre annulaire (5) dans un dispositif de filtre (1),
en particulier dans un filtre à huile ou à carburant,
- dans lequel l'élément de filtre annulaire (5) présente sur une rondelle d'extrémité inférieure (6) une goupille (7) dépassant en saillie axialement, au moyen de laquelle il s'engage dans un premier canal (8) lorsque le dispositif de filtre (1) est monté,
- dans lequel l'élément de filtre annulaire (5) présente un élément de guidage (13) qui est agencé sur un disque d'extrémité supérieur fermé (21) ou sur un cadre intérieur (22) en forme de structure d'appui de l'élément de filtre annulaire (5), en particulier même réalisé d'un seul tenant avec celui-ci,
- dans lequel le dispositif de filtration (1)
- possède un boîtier de filtre (4) présentant un pot de boîtier de filtre (2) et un couvercle de boîtier de filtre (3), dans lequel l'élément de filtre annulaire (5) peut être agencé,
- présente un mandrin tubulaire (10) qui, lorsque le dispositif de filtre (1) est monté, s'engage dans un espace intérieur (11) de l'élément de filtre annulaire (5),
dans lequel un contour de guidage (12) est prévu à une extrémité libre du mandrin tubulaire (10), lequel contour interagit avec l'élément de guidage (13) agencé sur l'élément de filtre annulaire (5),
- présente un canal pur (15),
- dans lequel le contour de guidage (12) côté mandrin présente une rainure axiale (14) vers laquelle l'élément de guidage (13) peut être guidé lors du montage du dispositif de filtre (1) et qui est agencée par rapport à la broche (7) de sorte que celle-ci peut être introduite dans le premier canal (8) à condition que l'élément de guidage (13) s'insère dans la rainure axiale (14),
- dans lequel une soupape (16) avec un siège de soupape (17) et un corps de soupape (18) précontraint par ressort contre celui-ci en position de fermeture est agencée dans le canal pur (15),
- dans lequel l'élément de guidage (13) interagit avec le corps de soupape (18) de sorte que l'élément de guidage (13) transfère le corps de soupape (18) dans une position d'ouverture lors d'une insertion dans la rainure axiale (14).

17. Utilisation selon la revendication 16,
**caractérisée en ce que**
l'élément de guidage (13) présente une butée inférieure pour actionner une tige de corps de soupape (19) du corps de soupape (18).

18. Utilisation selon la revendication 16 ou 17,
**caractérisée en ce que**
l'élément de guidage (13) est agencé dans le tiers/la zone supérieur(e), en particulier dans la zone du disque d'extrémité supérieur (21), de l'élément de filtre annulaire (5).
